# EUROPEAN PATENT APPLICATION

(11) **EP 3 940 542 A1**
(43) Date of publication of application: **19.01.2022**
(21) Application number: 20810727.6
(22) Date of filing: 27.04.2020
(51) Int. Cl.: G06F 13/00

(54) **CONTENT-PRESENTATION SYSTEM, OUTPUT DEVICE, AND INFORMATION PROCESSING METHOD**

(30) Priority: 17.05.2019 JP 2019093983; 06.04.2020 JP 2020068559
(71) Applicant: Kabushiki Kaisha Tokai Rika Denki Seisakusho, Aichi 480-0195 (JP)
(72) Inventor: MITSUI, Yuji, Niwa-gun, Aichi 480-0195 (JP); SASAKI, Shinobu, Niwa-gun, Aichi 480-0195 (JP); IWATA, Kenji, Niwa-gun, Aichi 480-0195 (JP); OHNISHI, Takeshi, Niwa-gun, Aichi 480-0195 (JP); TAKAGI, Yuka, Niwa-gun, Aichi 480-0195 (JP); HIROSE, Fumiaki, Niwa-gun, Aichi 480-0195 (JP); TAKAI, Toshihito, Niwa-gun, Aichi 480-0195 (JP); ARAYA, Takao, Niwa-gun, Aichi 480-0195 (JP); NOMURA, Keiji, Niwa-gun, Aichi 480-0195 (JP); NAKANE, Keita, Niwa-gun, Aichi 480-0195 (JP); SENGOKU, Takakazu, Niwa-gun, Aichi 480-0195 (JP); IMAI, Tomomi, Niwa-gun, Aichi 480-0195 (JP)
(74) Representative: TBK
(86) International application number: PCT/JP2020/017885
(87) International publication number: WO 2020/235307

(57) **Abstract**

[Object] To provide a structure capable of further improving entertainingness of content.

[Solution] A content providing system comprising: an output unit; and a control unit configured to control the output unit such that an output is performed in accordance with content.

## Description

### Technical Field

The present invention relates to a content providing system, an output device, and an information processing method.

### Background Art

In recent years, a wide variety of content such as movies, music, and games has been provided to users. To improve quality of experience of users when content is provided, technologies for improving entertainingness of content have been developed. For example, the following Patent Literature 1 discloses a technology for automatically calculating a placement position of a speaker appropriate for a user and providing information regarding the arrangement position.

### Citation List

### Patent Literature

Patent Literature 1: PCT International Publication No. WO/2017/110882

### Summary of Invention

### Technical Problem

In the technology disclosed in the foregoing Patent Literature 1, however, entertainingness of content is improved merely by optimizing a placement position of a speaker. There is still a room for improving entertainingness of content.

Accordingly, the present invention has been devised in view of the foregoing problem and an objective of the present invention is to provide a structure capable of further improving entertainingness of content.

### Solution to Problem

To solve the above described problem, according to an aspect of the present invention, there is provided a content providing system comprising: an output unit; and a control unit configured to control the output unit such that an output is performed in accordance with content.

The control unit may control the output unit such that additional information in accordance with the content is output along with the content.

The control unit may control the output of the output unit based on information regarding a portion which is being output in the content.

The control unit may control the output unit such that a feature sound is extracted from a sound included in the content and vibration is output in accordance with the extracted feature sound.

The control unit may control the output of the output unit in accordance with a situation in which the content is appreciated.

The control unit may control the output of the output unit based in a situation of a user appreciating the content.

The user appreciating the content may be aboard a moving object, and the control unit may control the output of the output unit based on information regarding the moving object.

The content may be information indicating an aspect of a first space, and the control unit may control a device disposed in a second space different from the first space as the output unit.

To solve the above described problem, according to another aspect of the present invention, there is provided an output device comprising: an output unit configured to perform an output based on control information for giving an instruction to perform the output in accordance with content.

To solve the above described problem, according to another aspect of the present invention, there is provided an information processing method comprising: controlling an output unit such that an output is performed in accordance with content.

### Advantageous Effects of Invention

According to the present invention, as described above, it is possible to provide a structure capable of further improving entertainingness of content.

### Brief Description of Drawings

FIG. 1 is a block diagram illustrating an example of a logical configuration of a content providing system according to an embodiment of the present invention.
FIG. 2 is a diagram illustrating an application example of the content providing system according to the embodiment.
FIG. 3 is a flowchart illustrating an example of a flow of a content providing process performed in the content providing system according to the embodiment.

### Description of Embodiments

Hereinafter, referring to the appended drawings, preferred embodiments of the present invention will be described in detail. It should be noted that, in this specification and the appended drawings, structural elements that have substantially the same function and structure are denoted with the same reference numerals, and repeated explanation thereof is omitted.

### «1. Configuration»

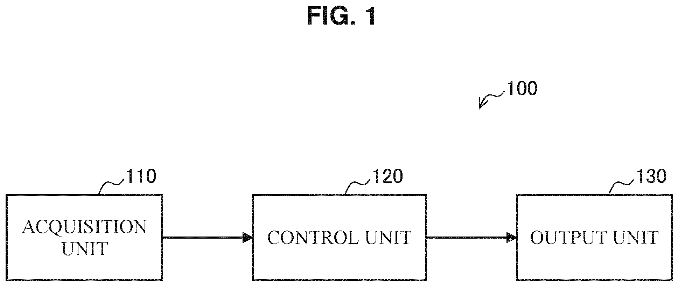

FIG. 1 is a block diagram illustrating an example of a logical configuration of a content providing system 100 according to an embodiment of the present invention. As illustrated in FIG. 1, the content providing system 100 includes an acquisition unit 110, a control unit 120, and an output unit 130.

The acquisition unit 110 has a function of acquiring information. As one example, the acquisition unit 110 acquires content. The content is information including text, an image (still image/moving image), and sound. The content may include information perceived by another sensory organ such as tactile information in addition to or instead of the visual information and the auditory information. Specific examples of the content include a movie, a sports video, a game, music, a footstep, a book reading sound, and an advertisement. The acquisition unit 110 is configured as, for example, an external interface such as a wired/wireless communication interface and a Universal Serial Bus (USB) port and can acquire information from the outside. As another example, the acquisition unit 110 may acquire information indicating an appreciation situation of content. Examples of information indicating the appreciation situation of content include information regarding a user provided with content and information regarding a vehicle 10 which is a place in which content is provided. The acquisition unit 110 is configured by, for example, any sensor such as a biological sensor, an inertial sensor, an imaging device, and a microphone.

The control unit 120 has a function of controlling the overall operation in the content providing system 100. The control unit 120 is configured by, for example, an electronic circuit such as a central processing unit (CPU) and a microprocessor. For example, the control unit 120 controls an output by the output unit 130 by generating control information for giving an instruction to perform the output in accordance with content and outputting the control information to the output unit 130. The control information includes, for example, content, an output device which is used to output content, an output setting (an output level, a directivity setting, and the like) of each output device, and information which is additionally output along with the content.

The output unit 130 has a function of outputting information to a user. The output unit 130 is configured, as will be described, as an output device that outputs a stimulus perceived by the user of at least one of a visual presentation unit, an auditory presentation unit, a tactile presentation unit, a gustatory presentation unit, and an olfactory presentation unit. The visual presentation unit has a function of performing visual presentation (that is, outputting a stimulus perceived by the sense of vision). The visual presentation unit is configured by, for example, a display device such as a display or a projector capable of outputting an image, an illumination device such as a light-emitting diode (LED) lamp capable of emitting light, and a control device for ambient light, such as a window blind. The auditory presentation unit has a function of performing auditory presentation (that is, outputting a stimulus perceived by the sense of hearing). The auditory presentation unit is configured by a sound output device such as a speaker, an earphone, or a bone conduction earphone. The tactile presentation unit has a function of performing tactile presentation (that is, outputting a stimulus perceived by the sense of touch). The tactile presentation unit is configured by, for example, a vibration device such as an eccentric motor and a voice coil, a blower device that generates wind, a temperature changing device that outputs a hot sensation/cold sensation, and a device that outputs an electrical stimulus. The gustatory presentation unit has a function of performing gustatory presentation (that is, outputting a stimulus perceived by the sense of taste). The gustatory presentation unit is configured by, for example, a device that emits a chemical substance and a device that outputs an electrical stimulus to a gustatory organ. The olfactory presentation unit has a function of performing olfactory presentation (that is, outputting a stimulus perceived by the sense of smell). The olfactory stimulation unit is configured by, for example, a device that emits a fragrance. The output unit 130 provides output based on control information output from the control unit 120.

Here, the content is information indicating an aspect (a sound, a scene, a temperature, vibration, or the like) of a first space and the output unit 130 is a device disposed in a second space different from the first space. The second space may be a space physically different from the first space. For example, the output unit 130 can output content generated from a remote location. The second space may be a space temporally different from the first space. For example, the output unit 130 can output previously generated content. Of course, the second space may be a space physically and temporally different from the first space.

It is conceivable that the content providing system 100 can be applied to various devices. Hereinafter, an example in which the content providing system 100 is applied to, for example, a vehicle will be described. In this case, a user who appreciates content is a person who is abroad the vehicle.

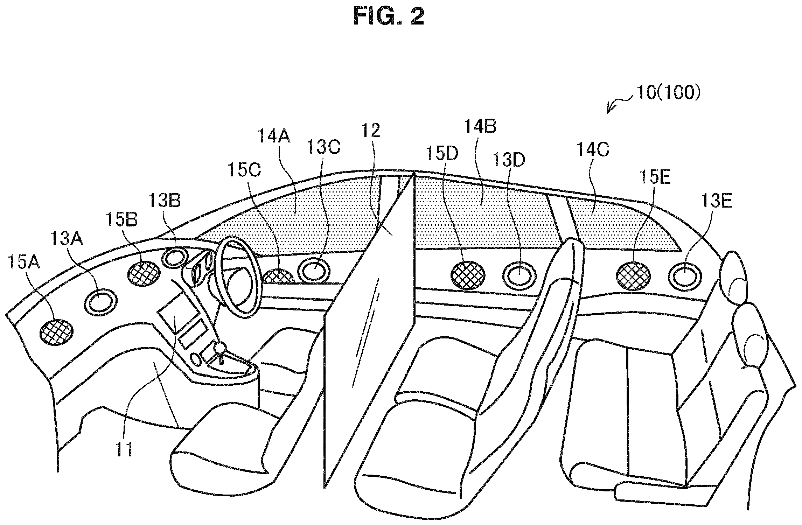

FIG. 2 is a diagram illustrating an application example of the content providing system 100 according to the embodiment. In the example illustrated in FIG. 2, the content providing system 100 is applied to the vehicle 10. A display 11 provided on a front seat, a projector (not illustrated) that is provided on a rear seat and performs projecting on a screen 12 which can be accommodated when the screen is not used, and illuminators 13 (13A to 13E) provided on the inner wall of the vehicle to surround all the seats are examples of the visual presentation unit. On pieces of window glass 14 (14Ato 14C), ambient light control devices such as mechanisms that raise and lower blinds and liquid crystal films capable of shielding light by flowing a current are provided as the visual presentation unit. Speakers 15 (15A to 15E) provided on the inner walls of the vehicle to surround all the seats are examples of the auditory presentation unit. A vibration device and a temperature changing device can be provided as the tactile presentation unit on a portion capable of coming in contact with the user, such as the surface of a seat, a backrest portion, an armrest portion, a seat belt, a handle, or a floor surface. An air conditioner (AC) is also an example of the tactile presentation unit that outputs hot or cold wind. The content providing system 100 may be configured by a single device (that is, the vehicle 10) or may be configured by a plurality of devices. For example, a wearable device such as a terminal provided in a shirt and a smartwatch, a cushion touched by the body of a user, a terminal device such as a smartphone, or a vehicle-exterior device such as a traffic signal may function as the output unit 130. On the other hand, the acquisition unit 110 and the control unit 120 are configured as, for example, an electronic control unit (ECU) (not illustrated).

### «2. Technical features»

### (1) Output control in accordance with content

The content providing system 100 controls the output unit 130 such that an output is performed in accordance with content. Here, the output control includes setting of a content output environment and control performed such that additional information in accordance with the content is output along with the content. As an example of the former, in accordance with the content, the content providing system 100 selects an output device that outputs the content or adjusts an output level (for example, display luminance, a volume, or the like). Thus, when the content is a movie, the screen 12 is lowered and used, for example, to construct an output environment appropriate for the content, so that entertainingness of the content can be improved. As an example of the latter, the content providing system 100 outputs image content and outputs a sound in accordance with the image content, or outputs sound content and outputs vibration in accordance with the sound content. That is, when the content is image content, the additional information may be a sound in accordance with the image content. When the content is sound content, the additional information may be vibration in accordance with the sound content. By outputting the additional information along with the content, it is possible to reinforce a content appreciation experience and improve entertainingness of the content such as a sense of realism and a sense of immersion.

The content providing system 100 may control an output of the content based on attribute information of the content. Examples of the attribute information of the content include kinds of content such as a movie and music, a genre of a movie, performers, a tempo of music, and a team that appears in a sports video. For example, the content providing system 100 turns on the illuminators 13 with team color of a team that appears in a sports video or turns on and off the illuminators 13 in accordance with a tempo of music. Thus, it is possible to improve a sense of realism of the content. The attribute information of the content may be acquired additionally with the content or may be separately acquired from an external database (DB) or the like.

The content providing system 100 may control an output of the content based on information regarding a portion which is being output in the content. The portion which is being output in the content is, for example, a portion such as a sound at a playback position in music content which is being output in the entire content. As one example, the content providing system 100 extracts a feature sound from a sound included in the content and performs control such that vibration in accordance with the extracted feature sound is output along with the sound. Examples of the feature sound include an attack sound of a bass and a sound of snare. The content providing system 100 outputs vibration in accordance with the feature sound by outputting a signal in which a frequency of the extracted feature sound is changed to a vibration device. Thus, when a small volume is reproduced and there is not a sufficient acoustic environment, it is possible to improve a sense of realism so that a user can feel excited. Even a hearing-impaired person can enjoy music freely. As another example, the content providing system 100 may analyze context of the content (for example, a story of a movie, a structure of music, and the like) and perform an output in accordance with the context. For example, the content providing system 100 outputs a hot or cold wind and vibration in accordance with a scene of a movie which is playing, outputs vibration in a goal scene in a sports video, or turns on each of the illuminators 13 with color similar to illuminators in a live video which is playing. The content providing system 100 may emphasize a sound and performance of an artist preferred by a user in a music group and play music further based on the preference of the user. Thus, it is possible to improve entertainingness of the content.

### (2) Output control in accordance with appreciation situation of content

The content providing system 100 may control an output in accordance with a situation in which the content is appreciated (hereinafter also referred to as an appreciation situation). Here, the control of the output includes setting of an output environment of the content in accordance with the appreciation situation. In addition, additional information in accordance with the appreciation situation may be output along with the content. By controlling the output in accordance with the appreciation situation, it is possible to appropriately reinforce an appreciation experience of the content.

The content providing system 100 may control an output based on a situation of a user appreciating the content. As one example, the content providing system 100 controls directivity of the speakers 15 such that a sound arriving at a user (a driver and a person performing assistance in a passenger seat) relevant to driving of the vehicle 10 is inhibited, and performs image display using the screen 12 rather than the display 11. Thus, it is possible to improve entertainingness of the content while not hindering driving of the vehicle 10.

The content providing system 100 may control an output based on information regarding the vehicle 10. As one example, the content providing system 100 may control an output level such as a volume and a vibration strength in accordance with guide information of a car navigation mounted in the vehicle 10 and a level of automatic driving when the vehicle 10 is automatically driven. Thus, it is possible to improve entertainingness of the content while guaranteeing safety of the vehicle 10. As another example, the content providing system 100 may lower a blind of the window glass 14 or adjust display luminance of the content in accordance with surrounding brightness. Thus, it is possible to improve entertainingness of the content.

### (3) Learning

The content providing system 100 may perform learning based on an appreciation aspect of the content of a user. For example, the content providing system 100 accumulates the content, the details of output control of the content and information indicating an appreciation aspect of the user (for example, a heart rate, a body temperature, an acceleration of a body motion of the user, and the like). Based on the accumulated information, the content providing system 100 learns and reuses details of the output control (for example, each of a heart rate, a body temperature, and acceleration is higher than a predetermined threshold) that excite a user, or recommends content that excites the user. Thus, it is possible to further improve quality of an experience of the user.

### (4) Specific examples

As a first specific example, a case in which the content is a movie will be described. The content providing system 100 blocks ambient light by lowering the blind to the window glass 14, causes the screen 12 to appear and projects a video from a projector, and plays a stereophonic sound from the speakers 15. Further, the content providing system 100 vibrates a seat in accordance with a scene of the movie and outputs a cold wind/hot wind and a smell. Thus, an environment like a 4D movie theater can be realized inside a vehicle.

As a second specific example, a case in which the content is a live sound source will be described. The content providing system 100 turns on each of the illuminators 13 with colors similar to a live place and plays the 3D stereophonic live sound source from the speakers 15. Thus, the user can feel as if the user were in a live place and is surrounded by light from glow sticks held by other spectators, and thus the user can feel a sense of hearing music, a musical performance, and cheering sounds in directions of 360 degrees. Further, the content providing system 100 can further increase a sense of realism by vibrating a seat and an armrest in accordance with a feature sound such as a cheering sound and a deep bass sound of the live sound source.

### (5) Flow of process

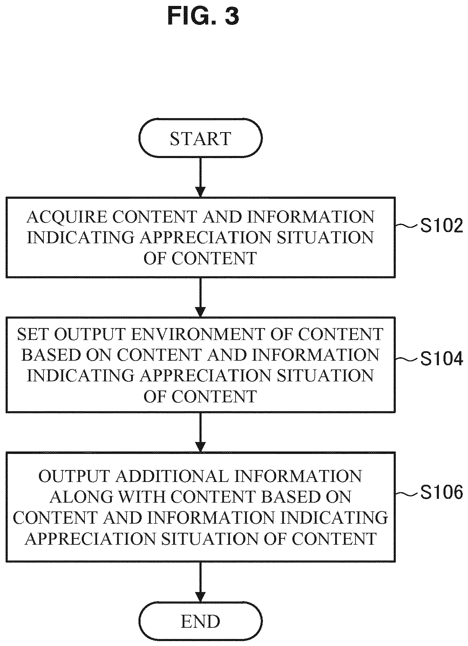

FIG. 3 is a flowchart illustrating an example of a flow of a content providing process performed in the content providing system 100 according to the embodiment. As illustrated in FIG. 3, the acquisition unit 110 first acquires content and information indicating an appreciation situation of the content (step S102). Subsequently, the control unit 120 sets an output environment of the content based on the content and the information indicating the appreciation situation of the content (step S104). For example, when the content is a movie, the control unit 120 selects the projector projecting an image to the screen 12 as an output device and lowers the blind to the window glass 14 in bright surroundings of the vehicle 10. Then, the control unit 120 controls the output unit 130 such that the additional information is output along with the content based on the content and the information indicating the appreciation situation of the content (step S106). For example, the control unit 120 outputs image content and outputs a sound in accordance with the image content, or outputs sound content and outputs vibration in accordance with the sound content.

### «3. Supplements»

Heretofore, preferred embodiments of the present invention have been described in detail with reference to the appended drawings, but the present invention is not limited thereto. It should be understood by those skilled in the art that various changes and alterations may be made without departing from the spirit and scope of the appended claims.

For example, the acquisition unit 110 may include an operation device which is a device detecting an operation. An example of the operation device is a touch panel. The control unit 120 may control the output unit 130 such that an output is performed in response to an operation detected by the operation device. One example of this will be described below.

When a pinch-in or pinch-out operation of expanding or contracting a map is performed with the operation device, the control unit 120 may control the output unit 130 such that tactile presentation and auditory presentation indicating the pinch-in or pinch-out operation are performed. The pinch-in or pinch-out operation is an operation of changing an interval between touch positions of two fingers with the operation device. More specifically, the pinch-in operation is an operation of shortening the interval and the pinch-out operation is an operation of lengthening the interval.

When a swipe operation is performed with the operation device, the control unit 120 may control the output unit 130 such that tactile presentation and auditory presentation indicating the swipe operation are performed. The swipe operation is an operation of changing a touch position of one finger with the operation device while the finger is touching the operation device.

When a scroll operation or a catch operation of a list scroll bar is performed with the operation device, the control unit 120 may control the output unit 130 such that tactile presentation and auditory presentation indicating the scroll operation or the catch operation are performed. When an operation of removing a finger from the list scroll bar is performed with the operation device, the control unit 120 may control the output unit 130 such that auditory presentation is performed in response to the removing of the finger. The list scroll bar is an operation region for moving a range of a display target in a list which is a list of a plurality of display items. The list scroll bar includes a body arranged in a straight shape and a knob located in a partial region of the body. The scroll operation is an operation of moving a position of the knob in the body. Through the scroll operation, the range of the display target in the list is moved, that is, scrolled. The catch operation is an operation of stopping moving of the position of the knob in the body.

When an operation of selecting a specific place on the map is performed with the operation device, the control unit 120 may control the output unit 130 such that tactile presentation and auditory presentation indicating the specific place are performed. Examples of the specific place are a sea and a river. For example, the control unit 120 may control the output unit 130 such that a sound and vibration that occur when swimming in the water of a sea and a river are presented.

When an operation of inputting text is performed with the operation device, the control unit 120 may control the output unit 130 such that a sound and vibration that occur when writing text with a pen are presented.

When an operation of moving an icon indication is performed with the operation device, the control unit 120 may control the output unit 130 such that tactile presentation and auditory presentation indicating this operation are performed. The icon indication corresponds to certain data. The icon indication is an indication in which a purpose, a function, or the like of the corresponding data is shown in a drawing or a pattern.

When an operation of inserting the icon indication into a folder such as a data folder or a trash folder is performed with the operation device, the control unit 120 may control the output unit 130 such that a sound and vibration of a plop that occur when an object falls into a box are presented. The operation of inserting the icon indication into a folder is, for example, a drag-and-drop. The drag-and-drop is an operation of moving an operation position to a target position while the icon indication is selected after an operation of selecting the icon indication is performed. Through this operation, the icon indication is moved to the target position.

When an operation is performed with the operation device, the control unit 120 may control the output unit 130 such that tactile presentation and auditory presentation indicating whether the operation with the operation device is effective are performed. For example, in a dial-type operation device, a rotatable range which is an angle range in which a dial can be rotated is different from an operational effective range which is an angle range in which an input operation performed by rotating the dial is effective in some cases. When the rotatable range is larger than the operational effective range and a rotational position of the dial comes in the operational effective range, the control unit 120 may control the output unit 130 such that tactile presentation and auditory presentation indicating that the rotational position of the dial comes in the operational effective range are performed.

When an operation of starting or ending an application is performed with the operation device, the control unit 120 may control the output unit 130 such that tactile presentation and auditory presentation indicating the start or end of the application are performed.

When an operation of starting or ending a sound recognition mode is performed with the operation device, the control unit 120 may control the output unit 130 such that tactile presentation and auditory presentation indicating the start or end of the sound recognition mode are performed. The sound recognition mode is a mode in which a sound collection function of converting a sound which is aerial vibration into an electrical sound signal and an analysis function of recognizing details of a sound by analyzing a sound signal are validated.

When an operation of sticking a pin into a map is performed with the operation device, the control unit 120 may control the output unit 130 such that tactile presentation and auditory presentation indicating the operation of sticking the pin in are performed. The operation of sticking the pin in is an operation of setting a pin indicating a specific point such as a favorite point on a map.

When an operation of selecting a pin on a map is performed with the operation device, the control unit 120 may control the output unit 130 such that tactile presentation and auditory presentation indicating the selection of the pin are performed.

When an operation of drawing a picture is performed with the operation device, the control unit 120 may control the output unit 130 such that a sound and vibration that occur when drawing the picture with a pen or a brush are presented.

When an operation of touching a specific object with a hand is performed with the operation device, the control unit 120 may control the output unit 130 such that tactile presentation and auditory presentation are performed in accordance with the object touched with the hand. As one example, when a handrail of a zoo is held with a hand, the control unit 120 may control the output unit 130 such that vibration involved in walking of an animal and a growl of the animal are presented. As another example, when a picture of an insect drawn on a picture book is touched with a hand, the control unit 120 may control the output unit 130 such that a tactile sense and a buzzing sound of an insect when the insect is touched are presented.

When an operation performed to watch a live music performance performed in a concert hall is performed with the operation device, the control unit 120 may control the output unit 130 such that a sound of the live music performance, a sound of spectators in the concert hall, and vibration of the spectators dancing in the concert hall are presented.

When an operation of locking or unlocking a door of a vehicle with a key is performed with the operation device, the control unit 120 may control the output unit 130 such that tactile presentation and auditory presentation indicating the locking or unlocking are performed. The operation of locking or unlocking the door of the vehicle with the key can be realized with, for example, an operation from a smartphone, an operation of touching a door handle, or the like.

When an operation of setting an alarm is performed with the operation device, the control unit 120 may control the output unit 130 such that a sound and vibration of the alarm are output at a set time.

The operation device may be a mouse. When one button is clicked among a plurality of buttons provided on the mouse, the control unit 120 may control the output unit 130 such that tactile presentation and auditory presentation are performed in response to the clicked button.

Examples of the output in response to the operation detected with the operation device have been described.

For example, in the foregoing embodiment, the example in which the present invention is applied to the vehicle has been described, but the application of the present invention is not limited thereto. The present invention can be applied to any moving object that the user boards such as a ship or an airplane. The present invention can be applied to any object used when a user appreciates content, such as a bathroom stall, a hotel room, or a sofa, in addition to the moving object.

Each device described in the present specification may be realized by a single device, or some or all of the devices may be realized by separate information processing devices. For example, in the exemplary functional configuration of the content providing system 100 illustrated in FIG. 1, the control unit 120 may be included in a device such as a server connected to the acquisition unit 110 and the output unit 130 via a network.

Note that, a series of processes performed by the devices described in this specification may be achieved by any of software, hardware, and a combination of software and hardware. A program that configures software is stored in advance in, for example, a recording medium (non-transitory medium) installed inside or outside the devices. In addition, for example, when a computer executes the programs, the programs are read into random access memory (RAM), and executed by a processor such as a CPU. The recording medium may be a magnetic disk, an optical disc, a magneto-optical disc, flash memory, or the like. Alternatively, the above-described computer program may be distributed via a network without using the recording medium, for example.

Further, in the present specification, the processes described using the flowcharts and the sequence diagrams are not necessarily executed in the order illustrated in the drawings. Some processing steps may be executed in parallel. In addition, additional processing steps may be employed and some processing steps may be omitted.

### Reference Signs List

- 10: vehicle
- 11: display
- 12: screen
- 13: illuminator
- 14: window glass
- 15: speaker
- 100: content providing system
- 110: acquisition unit
- 120: control unit
- 130: output unit

## Claims

1. A content providing system comprising:
an output unit; and
a control unit configured to control the output unit such that an output is performed in accordance with content.

2. The content providing system according to claim 1, wherein the control unit controls the output unit such that additional information in accordance with the content is output along with the content.

3. The content providing system according to claim 1 or 2, wherein the control unit controls the output of the output unit based on information regarding a portion which is being output in the content.

4. The content providing system according to any one of claims 1 to 3, wherein the control unit controls the output unit such that a feature sound is extracted from a sound included in the content and vibration is output in accordance with the extracted feature sound.

5. The content providing system according to any one of claims 1 to 4, wherein the control unit controls the output of the output unit in accordance with a situation in which the content is appreciated.

6. The content providing system according to claim 5, wherein the control unit controls the output of the output unit based in a situation of a user appreciating the content.

7. The content providing system according to claim 5 or 6,
wherein the user appreciating the content is aboard a moving object, and
wherein the control unit controls the output of the output unit based on information regarding the moving object.

8. The content providing system according to any one of claims 1 to 7, wherein the control unit controls the output unit such that an output is performed in response to an operation detected by an operation device which is a device detecting an operation.

9. The content providing system according to any one of claims 1 to 8,
wherein the content is information indicating an aspect of a first space, and
wherein the control unit controls a device disposed in a second space different from the first space as the output unit.

10. An output device comprising:
an output unit configured to perform an output based on control information for giving an instruction to perform the output in accordance with content.

11. An information processing method comprising:
controlling an output unit such that an output is performed in accordance with content.
